# EUROPÄISCHE PATENTSCHRIFT

(11) **EP 1 717 171 B1**
(45) Veröffentlichungstag und Bekanntmachung des Hinweises auf die Patenterteilung: **05.11.2008**
(21) Anmeldenummer: 06001593.0
(22) Anmeldetag: 26.01.2006
(51) Int. Cl.: B65G 59/02, B27B 31/00, B65H 1/16, B66F 7/04

(54) **Plattenaufteilanlage**
Device for dividing plates
Dispositif de découpe de plaques

(30) Priorität: 29.04.2005 DE 102005020978
(43) Veröffentlichungstag der Anmeldung: 02.11.2006
(73) Patentinhaber: HOLZMA Plattenaufteiltechnik GmbH, 75365 Calw-Holzbronn (DE)
(72) Erfinder: Weisser, Stefan, 72218 Wildberg (DE)
(74) Vertreter: Knapp, Thomas

(56) Entgegenhaltungen:
- EP-A1- 0 494 404
- DE-U- 1 957 282
- DE-U1- 7 606 142
- FR-A- 1 093 591
- NL-C2- 1 005 212

## Beschreibung

Die Erfindung betrifft eine Plattenaufteilanlage nach dem Oberbegriff des Anspruchs 1.

Eine solche Plattenaufteilanlage ist vom Markt her bekannt. Sie dient zur Aufteilung, meist mittels einer Säge, von großformatigen Platten in kleinere Zuschnitte. Hierzu verfügt die Plattenaufteilanlage über einen Hubtisch, auf dem ein Stapel der großformatigen aufzuteilenden Platten abgelegt ist.

Der Hubtisch ist unmittelbar neben einer Fördereinrichtung angeordnet und relativ zu dieser in der Höhe verstellbar. Durch Einstellung einer bestimmten Höhendifferenz zwischen dem Hubtisch und der Fördereinrichtung wird nur eine gewünschte Anzahl von Platten vom Hubtisch auf die Fördereinrichtung und weiter zur eigentlichen Plattenaufteilung gefördert.

Beim Hubtisch handelt es sich bei der bekannten Plattenaufteilanlage um eine dicke Platte, die an ihren vier Ecken an Seilen aufgehängt ist. Über Umlenkrollen werden die Seile zu einer gemeinsamen Halteeinrichtung geführt, die mittels eines Aktuators bewegt werden kann. Auf diese Weise kann der Hubtisch in der Höhe verstellt werden.

Aufgabe der vorliegenden Erfindung ist es, eine Plattenaufteilanlage der eingangs genannten Art so weiterzubilden, dass eine gewünschte Anzahl von Platten möglichst genau vom Hubtisch zur Fördereinrichtung bewegt werden kann.

Diese Aufgabe wird durch eine Plattenaufteilanlage mit den Merkmalen des Anspruchs 1 gelöst. Vorteilhafte Ausgestaltungen sind in Unteransprüchen angegeben.

Erfindungsgemäß wurde festgestellt, dass der Hubtisch bei der aus dem Stand der Technik bekannten Plattenaufteilanlage abhängig von dem Gewicht der von ihm getragenen Platten unterschiedlich verkippt. Es wurde ferner festgestellt, dass dies damit zusammenhängt, dass die absolute Längenänderung der einzelnen Seile auf Grund der unterschiedlichen Längen der Seile, bei ansonsten gleicher Last, unterschiedlich ist. Hier setzt die Erfindung an: Indem eine Seilverbindung, welche ein relativ kurzes Seil aufweist, eine insgesamt größere Elastizität aufweist als eine andere Seilverbindung mit längerem Seil, werden die Unterschiede in der absoluten Längenänderung zwischen zwei solchen Seilen reduziert oder sogar gänzlich eliminiert. In der Folge bleibt die Ausrichtung des Hubtisches im Raum weitgehend unabhängig von der Last, die vom Hubtisch getragen wird. Somit kann die Höhe des Hubtisches relativ zu einer benachbarten Fördereinrichtung mit verbesserter Genauigkeit eingestellt werden, was wiederum den Effekt hat, dass auch das "Abstapeln", also das Wegfördern einer ganz bestimmten Anzahl von auf dem Hubtisch befindlichen Platten, mit größerer Genauigkeit erfolgt.

Dabei sei ausdrücklich darauf hingewiesen, dass unter dem Begriff "Elastizität" eine Längenänderung pro Längeneinheit verstanden wird. Optimal ist es, wenn die unterschiedlichen Elastizitäten so gewählt sind, dass alle Seilverbindungen bei einer bestimmten Last die gleiche absolute Längenänderung erfahren. Ferner sei darauf hingewiesen, dass unter einer "Seilverbindung" nicht nur das Seil selbst, sondern alle die Elastizität der Verbindung vom Hubtisch zur Halteeinrichtung beeinflussenden beziehungsweise im Kraftfluss vom Hubtisch zu einem Rahmen liegenden Komponenten gehören.

Besonders einfach zu realisieren ist die unterschiedliche Elastizität durch Verwendung mindestens einer Federeinrichtung. Auf diese Weise können ansonsten identische Seile mit identischen Eigenschaften verwendet werden. Alternativ hierzu können aber auch die Seile selbst unterschiedliche elastische Eigenschaften aufweisen, beispielsweise durch eine entsprechende Materialwahl, einen entsprechenden Durchmesser, oder einen entsprechenden Seiltyp. Auf eine separate Federeinrichtung kann dann verzichtet werden. Auf diese Weise können auch bereits bestehende Plattenaufteilanlagen umgerüstet werden, ohne dass kostspielige konstruktive Änderungen erforderlich sind.

Eine konstruktiv simple Realisierung bei Verwendung einer Federeinrichtung besteht darin, diese mit einer Umlenkeinrichtung zu koppeln. Derartige Umlenkeinrichtungen müssen für die meisten Seile in Form von Umlenkrollen ohnehin vorgesehen werden. Dabei gilt, dass die Federeinrichtung relativ gesehen umso weicher sein muss, je kürzer das Seil relativ zu den anderen Seilen ist. Die Verwendung von Tellerfedern für die Bildung der Federeinrichtung hat den Vorteil, dass die Elastizität einfach über die Anzahl der verwendeten Tellerfedern eingestellt werden kann.

### Zeichnung

Nachfolgend wird ein besonders bevorzugtes Ausführungsbeispiel der vorliegenden Erfindung unter Bezugnahme auf die beiliegende Zeichnung näher erläutert. In der Zeichnung zeigen:
- Figur 1: eine schematische Seitenansicht einer Plattenaufteilanlage mit einem Hubtisch;
- Figur 2: eine schematisierte perspektivische Darstellung einer ersten Ausführungsform des Hubtisches von Figur 1 und seiner Lagerung;
- Figur 3: eine teilweise geschnittene Darstellung von vier Federeinrichtungen, die bei der Lagerung des Hubtisches von Figur 2 eingesetzt werden; und
- Figur 4: eine schematisierte perspektivische Darstellung einer zweiten Ausführungsform des Hubtisches von Figur 1 und seiner Lagerung.

### Beschreibung der Ausführungsbeispiele

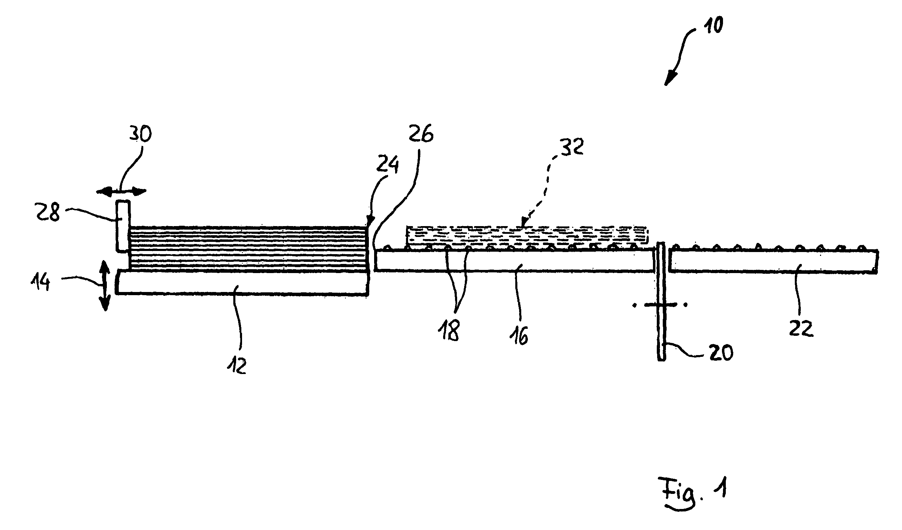

Eine Plattenaufteilanlage trägt in Figur 1 insgesamt das Bezugszeichen 10. Sie umfasst einen Hubtisch 12, der in der Höhe verstellbar ist (Pfeile 14). An den Hubtisch 12 schließt sich ein Fördertisch 16 an, auf dem eine Vielzahl von Förderrollen 18 vorhanden ist. Der Fördertisch 16 führt zu einer Säge, von der in Figur 1 nur das senkrecht zur Zeichnungsebene stehende Sägeblatt 20 dargestellt ist. Vom Hubtisch 12 aus gesehen auf der anderen Seite des Sägeblatts 20 ist ein Entnahmetisch 22 angeordnet.

Auf dem Hubtisch 12 ist ein Stapel 24 von großformatigen Platten (ohne Bezugszeichen) abgelegt. Da mit dem Sägeblatt 20 jedoch nur eine bestimmte Anzahl von Platten abgesägt werden kann, muss diese Anzahl von Platten in Form eines Teilstapels von dem Stapel 24 nach und nach entnommen werden. Hierzu wird der Hubtisch 12 entsprechend der Pfeile 14 so in der Höhe verstellt, dass jener Teilstapel, welcher zum Fördertisch 16 hin bewegt werden soll, knapp oberhalb einer Kante 26 des Fördertischs 16 angeordnet ist. Mittels eines Förderbalkens 28, der horizontal entsprechend der Pfeile 30 bewegt werden kann, kann nun der abzustapelnde Teilstapel auf den Fördertisch 16 verschoben werden. Ein solcher Teilstapel ist in Figur 1 gestrichelt dargestellt und trägt dort das Bezugszeichen 32.

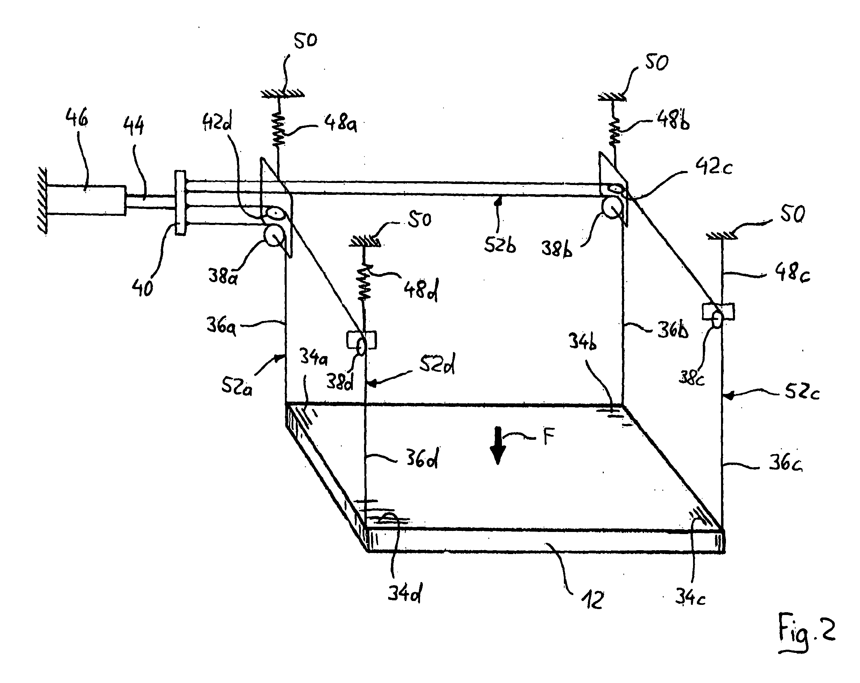

Das Funktionsprinzip, mit dem der Hubtisch 12 in der Höhe verstellt werden kann, wird nun anhand Figur 2 im Detail erläutert: Aus dieser erkennt man, dass der dort dargestellte Hubtisch 12 insgesamt rechteckige Form hat. In einem Eckbereich 34a greift ein Stahlseil 36a an. Entsprechendes gilt für die Eckbereiche 34b bis d und Stahlseile 36b bis d. Die Stahlseile 36 sind vertikal nach oben geführt bis zu Umlenkrollen 38a bis d mit jeweils horizontaler Drehachse. Während die Stahlseile 36a und 36b von den entsprechenden Umlenkrollen 38a und 38b direkt zu einer gemeinsamen Halteplatte 40 geführt sind, an der die Stahlseile 36a und 36b befestigt sind, benötigen die Stahlseile 36c und 36d zusätzliche Umlenkrollen 42c und 42d mit vertikaler Drehachse, durch die diese Stahlseile horizontal zur Halteplatte 40 hin umgelenkt werden. Die Halteplatte 40 ist mit einem Kolben 44 eines elektrischen oder pneumatischen oder hydraulischen Aktuators 46 verbunden.

Man erkennt, dass das Stahlseil 36a eine Länge Lₐ aufweist, das Stahlseil 36b eine Länge L_{b}, das Stahlseil 36c eine Länge L_{c}, und das Stahlseil 36d eine Länge L_{d}. Dabei gilt: Lₐ < L_{d} < L_{b} < L_{c}. Die oberhalb des Eckbereichs 34c angeordnete Umlenkrolle 38c ist durch eine starre Verbindung 48c an einem nur schematisch dargestellten Rahmen 50 des Hubtisches 12 befestigt. Dagegen sind die vertikal oberhalb der Eckbereiche 34a, 34b und 34d angeordneten Umlenkrollen 38a, 38b und 38d (nicht jedoch die ebenfalls in diesen Bereichen vorhandenen Umlenkrollen 42c und 42d) über entsprechende Federeinrichtung 48a, 48b und 48d am Rahmen 50 befestigt. Dabei gilt für die Elastizität E der Federeinrichtungen 48a, 48b und 48d: Eₐ > E_{d} > E_{b}. Die Stahlseile 36, Umlenkrollen 38 und die Federeinrichtungen 48 bilden insgesamt Seilverbindungen 52a bis 52d vom Hubtisch 12 zur Halteplatte 40.

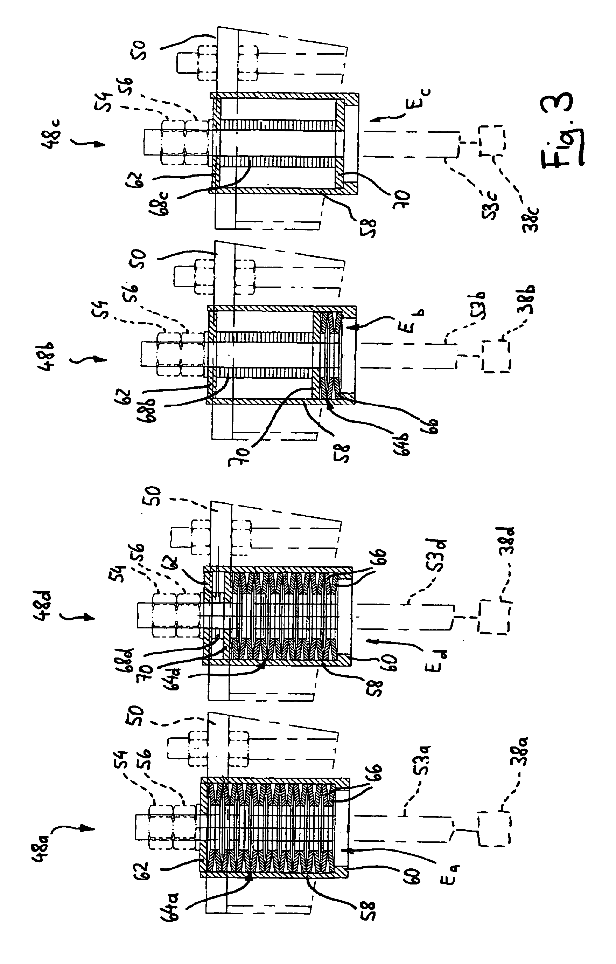

Die genaue Ausgestaltung der Federeinrichtungen 48 geht aus Figur 3 hervor. Dabei wird diese zunächst beispielhaft anhand der Federeinrichtung 48a erläutert, welche in Figur 3 ganz links gezeichnet ist: Die Federeinrichtung 48a umfasst eine nur gestrichelt gezeichnete Stange 53, an deren in Figur 3 unterem Ende die in Figur 3 nur schematisch dargestellte Umlenkrolle 38a befestigt ist. Die Stange 53 weist an ihrem in Figur 3 oberen Ende ein Gewinde (ohne Bezugszeichen) auf, auf welches zwei Muttern 54 und 56 aufgeschraubt und gegeneinander verspannt sind. Die Stange 53 durchsetzt ein zylindrisches Gehäuse 58, welches an seinem in Figur 3 unteren Rand einen nach radial einwärts gerichteten Bund 60 aufweist. Zwischen diesem Bund 60 und einer Gegenplatte 62, welche sich an den beiden Muttern 54 und 56 abstützt, ist ein Stapel 64a aus Tellerfedern 66 angeordnet. Das Gehäuse 58 ist am Rahmen 50 des Hubtisches 12 befestigt.

Die entsprechende Federeinrichtung 48d unterscheidet sich von der Federeinrichtung 48a dadurch, dass auf die Stange 53 unterhalb von der Gegenplatte 62 eine Distanzhülse 68d aufgeschoben ist, unterhalb von der eine zweite Gegenplatte 70 angeordnet ist. Die Distanzhülse 68d und die zweite Gegenplatte 70 haben insgesamt eine axiale Länge, welche exakt der axialen Länge von drei Tellerfedern 66 (im entspannten Zustand) entspricht. Da der Stapel 64d von Tellerfedern 66 bei der Federeinrichtung 48d drei Tellerfedern 66 weniger enthält als der Stapel 64a der Federeinrichtung 48a, entspricht die in Figur 3 dargestellte Ruheposition der Stange 53d bei der Federeinrichtung 48d exakt der Ruheposition der Stange 53a der Federeinrichtung 48a, wobei die Federeinrichtung 48d auf Grund der geringeren Anzahl von Tellerfedern 66 eine geringere Elastizität E_{d} aufweist als die Federeinrichtung 48a (Elastizität Eₐ).

Die Federeinrichtung 48b umfasst eine nochmals deutlich längere Distanzhülse 68b und einen Stapel 64b von nur noch drei Tellerfedern 66, was zu einer nochmals verringerten Elastizität (E_{b}) dieser Federeinrichtung 48b gegenüber der Federeinrichtung 48d führt. Die in Figur 3 auf der äußersten rechten Seite gezeichnete Federeinrichtung 48c schließlich weist eine nochmals längere Distanzhülse 68c auf, wobei bei dieser Federeinrichtung 48c überhaupt keine Tellerfedern 66 vorhanden sind. Auf diese weise wird die bereits im Zusammenhang mit Figur 2 angesprochene starre Verbindung 48c zwischen der Umlenkrolle 38c und dem Rahmen 50 geschaffen, deren Elastizität E_{c} in etwa Null ist.

Mit den Federeinrichtungen 48a bis d hat es Folgendes auf sich: Wie bereits oben dargelegt worden ist, haben die Stahlseile 36a bis 36d unterschiedliche Länge Lₐ bis L_{d}. Wird auf den Hubtisch 12 der in Figur 1 dargestellte Plattenstapel 24 abgelegt, wird er durch eine Gewichtskraft F belastet. Wenn die Stahlseile 36a bis 36d gleichen Durchmesser haben und aus dem gleichen Material hergestellt sind, ergibt sich für jedes Stahlseil 36a bis 36d eine absolute Längenänderung dLₐ bis dL_{d}, die proportional ist zur jeweiligen Länge Lₐ bis L_{d}. Ohne Gegenmaßnahmen würde sich nun die Lage des Hubtisches 12 im Raum verändern - er würde kippen.

Die Elastizitäten der Federeinrichtungen 48a bis 48d sind nun so gewählt, dass die Unterschiede zwischen den absoluten Längenänderungen dLₐ bis dL_{d} der Stahlseile 36a bis 36d kompensiert werden. Dabei bildet das Stahlseil 36c mit der größten Länge L_{c} den Bezugspunkt, denn es weist auch die größte absolute Längenänderung dL_{c} auf. Die jeweils geringeren Längenänderungen dLₐ, dL_{b} und dL_{d} werden durch die entsprechenden Federwege der Federeinrichtungen 48a, 48b und 48d so ergänzt, dass sich in der Summe an den Eckbereichen 34a bis 34d identische Höhenänderungen ergeben.

In einem nicht dargestellten Ausführungsbeispiel sind nicht die Umlenkrollen teilweise federelastisch gelagert, sondern die Federeinrichtung ist in das Seil integriert, indem dieses einen Abschnitt aufweist, der als Federeinrichtung ausgebildet ist. Eine ferner nicht dargestellte Alternative besteht darin, die unterschiedliche Elastizität der Seilverbindungen durch eine entsprechende Materialwahl und/oder eine entsprechende Dimensionierung des Querschnitts der Seilverbindung zu erzielen.

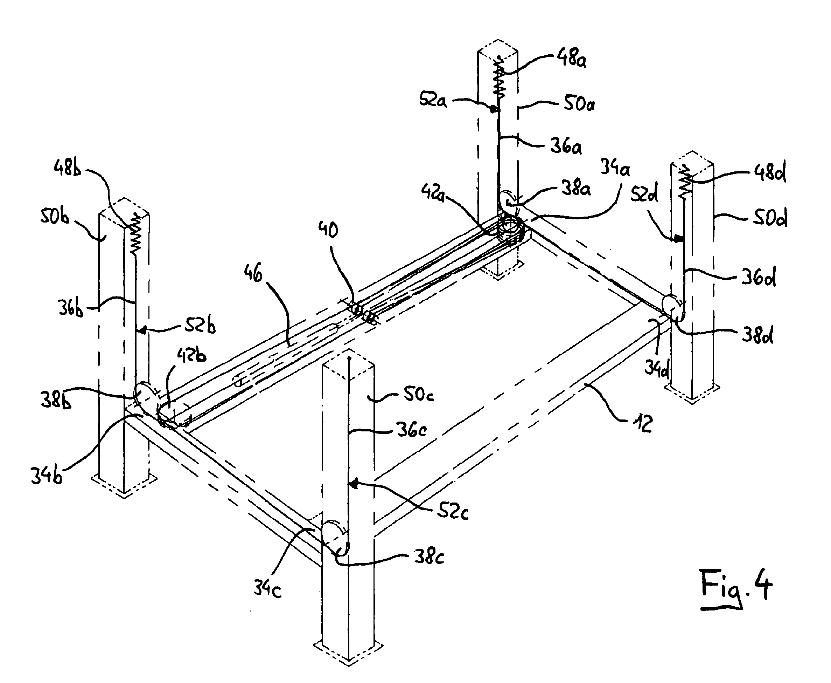

In Figur 4 ist ein weiteres Ausführungsbeispiel eines Hubtisches 12 gezeigt. Dabei tragen solche Elemente und Bereiche, die äquivalente Funktionen zu Elementen und Bereichen des oben beschriebenen Ausführungsbeispiels aufweisen, die gleichen Bezugszeichen. Sie sind darüber hinaus nicht nochmals im Detail erläutert.

Bei dem in Figur 4 gezeigten Hubtisch 12 sind die von der Halteplatte 12 abgewandten Ende der Seile 36a bis 36d nicht am Hubtisch 12 selbst, sondern an Säulen 50a bis 50d befestigt, die neben den Eckbereichen 34a bis 34d des Hubtisches 12 stehen. Die Federeinrichtungen 48 sind zwischen den Seilenden und den Säulen 50 angeordnet. Die Seile 36a bis 36d verlaufen im Rahmen (ohne Bezugszeichen) des Hubtisches 12, und auch der Aktuator 46 und die Umlenkrollen 42a und 42b sind in diesem Rahmen untergebracht. Die Umlenkrolle 42a mit vertikaler Drehachse ist dabei als Vierfachumlenkrolle ausgeführt, an der, von oben nach unten, die Seile 36b, 36d, 36c, und 36a umgelenkt werden. Die Umlenkrolle 42b mit vertikaler Drehachse ist als Zweifachumlenkrolle ausgeführt, an der, von oben nach unten, die Seile 36c und 36b umgelenkt werden.

## Patentansprüche

1. Plattenaufteilanlage (10), mit einem Hubtisch (12), auf dem ein Plattenstapel (24) ablegbar ist, und mit einer Mehrzahl von Seilverbindungen (52), über die der Hubtisch (12) vertikal gehalten ist und deren Seile (36) einerseits an unterschiedlichen Stellen (34) des Hubtisches (12) und andererseits am vom Hubtisch (12) entfernten Ende an einer gemeinsamen Halteeinrichtung (40) angreifen und insoweit unterschiedliche Länge (L) aufweisen, **dadurch gekennzeichnet, dass** eine Seilverbindung (52) mit kürzerem Seil (36) eine insgesamt größere Elastizität (E) aufweist als eine andere Seilverbindung (52) mit längerem Seil (36).

2. Plattenaufteilanlage (10) nach Anspruch 1, **dadurch gekennzeichnet, dass** mindestens die Seilverbindung (52) mit kürzerem Seil (36) eine Federeinrichtung (48) aufweist.

3. Plattenaufteilanlage (10) nach Anspruch 2, **dadurch gekennzeichnet, dass** mindestens zwei Seilverbindungen (52) jeweils eine Federeinrichtung (48) umfassen, und dass die Federeinrichtung (48) der Seilverbindung (52) mit kürzerem Seil (36) eine größere Elastizität (E) aufweist als die Federeinrichtung (48) der Seilverbindung (52) mit längerem Seil (36).

4. Plattenaufteilanlage (10) nach einem der Ansprüche 1 oder 2, **dadurch gekennzeichnet, dass** mindestens eine Federeinrichtung (48) an einer Umlenkeinrichtung (38) für ein Seil (36) mindestens mittelbar befestigt ist.

5. Plattenaufteilanlage (10) nach Anspruch 4, **dadurch gekennzeichnet, dass** an vier Eckbereichen (34) des Hubtisches (12) jeweils ein Seil (36) angreift, welches vertikal oberhalb des Hubtisches (12) nach unten über eine Umlenkeinrichtung (48) umgelenkt wird, dass alle Seile (36) unterschiedliche Länge (L) aufweisen, und dass an der dem kürzesten Seil (36a) zugeordneten Umlenkeinrichtung (38a) eine Federeinrichtung (48a) mindestens mittelbar befestigt ist, die eine größere Elastizität (Eₐ) aufweist als die Federeinrichtung (48d), die an der Umlenkeinrichtung (38d) mindestens mittelbar befestigt ist, die dem zweitkürzesten Seil (36d) zugeordnet ist, und dass die letztgenannte Federeinrichtung (48d) eine größere Elastizität (E_{d}) aufweist als die Federeinrichtung (48b), die an der Umlenkeinrichtung (38b) mindestens mittelbar befestigt ist, die dem drittkürzesten Seil (36b) zugeordnet ist.

6. Plattenaufteilanlage nach Anspruch 1, **dadurch gekennzeichnet, dass** die Seilverbindung mit kürzerem Seil einen Abschnitt aufweist, der als Federeinrichtung ausgebildet ist.

7. Plattenaufteilanlage (10) nach einem der Ansprüche 2 bis 6, **dadurch gekennzeichnet, dass** die Federeinrichtung (48) mindestens eine Tellerfeder (66) umfasst.

8. Plattenaufteilanlage nach Anspruch 1, **dadurch gekennzeichnet, dass** die Seilverbindung mit kürzerem Seil ein Seil aus einem elastischeren Material und/oder ein dünneres Seil als die Seilverbindung mit längerem Seil umfasst.

## Claims

1. A device for dividing plates (10), having an elevating platform (12), on which a stack of plates (24) can be deposited, and having a plurality of cable connections (52), by means of which the elevating platform (12) is vertically held, and whose cables (36) engage, on the one side, different locations (34) of the elevating platform (12) and, on the other side at the end remote from the elevating platform (12), engage a common holding device (40) and therefore are of different lengths (L), **characterized in that** a cable connection (52) by means of a shorter cable (36) shows greater elasticity (E) as a whole than another cable connection (52) by means of a longer cable (36).

2. The device for dividing plates (10) in accordance with claim 1, **characterized in that** at least the cable connection (52) containing the shorter cable (36) has a spring arrangement (48).

3. The device for dividing plates (10) in accordance with claim 2, **characterized in that** at least two cable connections (52) each have a spring arrangement (48), and that the spring arrangement (48) of the cable connection (52) containing the shorter cable (36) shows greater elasticity (E) than another cable connection (52) by means of the longer cable (36).

4. The device for dividing plates (10) in accordance with one of claims 1 or 2, **characterized in that** at least one spring arrangement (48) is at least indirectly fastened to a deflection arrangement (38) for a cable (36).

5. The device for dividing plates (10) in accordance with claim 4, **characterized in that** cables (36) respectively act at four corner areas (34) of the elevating platform (12) and are vertically deflected downward above the elevating platform (12) by means of a deflection arrangement (38), that all cables (36) have different lengths, and that a spring arrangement (48a) is at least indirectly fastened to the deflection arrangement (38a) assigned to the shortest cable (36a) and has greater elasticity (Eₐ) than the spring arrangement (48d), which is at least indirectly fastened to the deflection arrangement (38d) assigned to the second-shortest cable (36d), and that the last mentioned spring arrangement (48d) has greater elasticity (E_{d}) than the spring arrangement (48b), which is fastened at least indirectly to the deflection arrangement (38b) assigned to the third-shortest cable (36b).

6. The device for dividing plates (10) in accordance with claim 1, **characterized in that** the cable connection containing a shorter cable has a section embodied as a spring arrangement.

7. The device for dividing plates (10) in accordance with one of claims 2 to 6, **characterized in that** the spring arrangement (48) is comprised of at least one plate spring (66).

8. The device for dividing plates (10) in accordance with claim 1, **characterized in that** the cable connection containing the shorter cable is comprised of a cable made of a more elastic material, and/or is a thinner cable, than the cable connection containing the longer cable.

## Revendications

1. Dispositif de découpe de plaques (10), comportant un plateau de levage (12), sur lequel peut être déposée une pile de plaques (24), et comportant une pluralité de liaisons par câbles (52), par l'intermédiaire desquelles le plateau de levage (12) est maintenu verticalement et dont les câbles (36) entrent en prise, d'une part, avec différents emplacements (34) du plateau de levage (12) et, d'autre part, au niveau de l'extrémité éloignée du plateau de levage (12), avec un dispositif de fixation (40) commun et, en ce sens, ont une longueur (L) différente, **caractérisé en ce qu'**une liaison par câble (52) avec un câble (36) plus court possède dans l'ensemble une plus grande élasticité (E) qu'une autre liaison par câble (52) avec un câble (36) plus long.

2. Dispositif de découpe de plaques (10) selon la revendication 1, **caractérisé en ce qu'**au moins la liaison par câble (52) avec le câble (36) plus court comporte un dispositif à ressort (48).

3. Dispositif de découpe de plaques (10) selon la revendication 2, **caractérisé en ce qu'**au moins deux liaisons par câble (52) comportent chacune un dispositif à ressort (48), et **en ce que** le dispositif à ressort (48) de la liaison par câble (52) avec le câble (36) plus court possède une plus grande élasticité (E) que le dispositif à ressort (48) de la liaison par câble (52) avec le câble (36) plus long.

4. Dispositif de découpe de plaques (10) selon la revendication 1 ou 2, **caractérisé en ce qu'**au moins un dispositif à ressort (48) est fixé, au moins indirectement, sur un dispositif de renvoi (38) pour un câble (36).

5. Dispositif de découpe de plaques (10) selon la revendication 4, **caractérisé en ce qu'**au niveau de chacune des quatre zones d'angle (34) du plateau de levage (12) entre en prise respectivement un câble (36) qui, verticalement au-dessus du plateau de levage (12), est dévié vers le bas par un dispositif de renvoi (48), **en ce que** tous les câbles (36) ont des longueurs (L) différentes, et **en ce que** sur le dispositif de renvoi (38a) associé au câble (36a) le plus court, est fixé au moins indirectement un dispositif à ressort (48a) qui possède une plus grande élasticité (Eₐ) que le dispositif à ressort (48d), qui est fixé au moins indirectement au dispositif de renvoi (38d), qui est associé au câble (36d) avec la deuxième plus courte longueur, et **en ce que** le dispositif à ressort (48d) cité en dernier lieu possède une plus grande élasticité (E_{d}) que le dispositif à ressort (48b), qui est fixé au moins indirectement au dispositif de renvoi (38b), qui est associé au câble (36b) avec la troisième plus courte longueur.

6. Dispositif de découpe de plaques selon la revendication 1, **caractérisé en ce que** la liaison par câble avec le câble plus court comporte une partie qui est réalisée sous forme de dispositif à ressort.

7. Dispositif de découpe de plaques (10) selon l'une quelconque des revendications 2 à 6, **caractérisé en ce que** le dispositif à ressort (48) comporte au moins un ressort Belleville (66).

8. Dispositif de découpe de plaques selon la revendication 1, **caractérisé en ce que** la liaison par câble avec le câble plus court comporte un câble réalisé dans un matériau plus élastique et/ou un câble plus mince que la liaison par câble avec le câble plus long.
